# EUROPÄISCHE PATENTSCHRIFT

(11) **EP 1 798 488 B1**
(45) Veröffentlichungstag und Bekanntmachung des Hinweises auf die Patenterteilung: **18.08.2010**
(21) Anmeldenummer: 06025646.8
(22) Anmeldetag: 12.12.2006
(51) Int. Cl.: F24D 11/00, F28D 20/02

(54) **Anlage zur Kraft-Wärme-Kopplung**
Cogeneration system
Système de cogénération

(30) Priorität: 19.12.2005 AT 20242005
(43) Veröffentlichungstag der Anmeldung: 20.06.2007
(73) Patentinhaber: Vaillant GmbH, 42859 Remscheid (DE)
(72) Erfinder: Badenhop, Thomas, 51688 Wipperfürth (DE); Berg, Joachim, 42859 Remscheid (DE); Götz, Klaus, 42653 Solingen (DE); Kohlhage, Jörg, 45329 Essen (DE); Kraus, Matthias, 42929 Wermelskirchen (DE); Oerder, Bodo, 42855 Remscheid (DE); Paulus, Jochen, 42655 Solingen (DE)
(74) Vertreter: Hocker, Thomas

(56) Entgegenhaltungen:
- EP-A- 1 482 254
- WO-A-98/40684
- JP-A- 57 087 593

## Beschreibung

Die Erfindung bezieht sich auf eine Anlage zur Kraft-Wärme-Kopplung mit zumindest einer Brennstoffzelle sowie einem Wärmespeicher für Heiz- und / oder Brauchwasser.

Bei Anlage zur Kraft-Wärme-Kopplung mit Brennstoffzellen besteht vorwiegend beim stromgeführten Betrieb das Problem, die Wärme abzuführen. Hierfür werden in der Regel Warmwasserspeicher verwendet.

Bei Warmwasserspeichern besteht das Problem, dass auf der einen Seite die Temperatur eine bestimmte Temperatur nicht übersteigen soll, um die Abstrahlverluste zu limitieren. Andererseits muss die Temperatur zumindest temporär oberhalb 55°C gehalten werden, um Legionellenbildung zu vermeiden. Um Wärme auf einem bestimmten Niveau entnehmen zu können, ist eine bestimmte Mindesttemperatur in einem Teilbereich notwendig. Hieraus resultiert ein relativ kleiner Temperaturbereich, in dem sich die Speichertemperatur aufhalten darf. Somit ist ein relativ großer Speicherbehälter notwendig, um viel Wärme aufnehmen zu können.

Brennstoffzellen sollen vorzugsweise in einem bestimmten Temperaturbereich mit entsprechenden Vorlauf- und Rücklauftemperaturen gekühlt werden. Hierbei ist es insbesondere erforderlich, dass bestimmte Schwellwerte nicht überschritten werden. Wird ein Warmwasserspeicher durch ein Brennstoffzellenheizgerät thermisch geladen, so steigen die Speichertemperatur an und somit auch die Rücklauftemperatur, welche wiederum in das Brennstoffzellenheizgerät gelangt. Überschreitet die Rücklauftemperatur hierbei jenen vorgegebenen Schwellwert, so kommt es zu einer Zwangsabschaltung. In diesem Fall kann weder Strom noch Wärme produziert werden. Insbesondere bei der Verwendung eines Reformers zur Erzeugung des wasserstoffhaltigen Betriebsgases für den Brennstoffzellenstapel sollte die Brennstoffzelle möglichst stetig ohne Unterbrechungen betrieben werden, da durch das Anfahren und Herunterfahren Degradationserscheinungen forciert werden. Eine Wirkungsgradeinbusse und eine Reduktion der Lebensdauer sind die Folge.

Aus der EP 1 482 254 A1 ist eine Anlage zur Kraft-Wärme-Kopplung gemäß dem Oberbegriff des Anspruchs 1 mit einer Brennstoffzelle und einem Latentwärmespeicher bekannt. Bei dem phasenändernden Material kann es sich um Natriumacetat handeln. Bei einer derartigen Vorrichtung ist damit zu rechnen, dass beim Erstarren des phasenändernden Materials eine Dämmschicht aus Latentspeichermaterial um die Durchlaufstrecke entsteht; diese behindert aufgrund der schlechten Wärmeleitfähigkeit den Wärmeübergang.

Die WO 2003/064931 A1 zeigt ein Wand- und Deckelement mit einem Phasenwechselmaterial. Die Aufgabe der WO 2003/064931 A1 besteht in der temporären Zwischenspeicherung von aus Räumen abgeführter Wärme, die im Bedarfsfall wieder genutzt werden kann. Zur Lösung dieser Aufgabe wird eine Emulsion aus Wasser und mikroverkapseltem Paraffin zur Wärmespeicherung genutzt. Die Gründe für die Verwendung von mikroverkapseltem Paraffin sind die Erhöhung der Feuerresistenz und die Vermeidung des Austritts von Paraffin. Die schlechte Wärmeleitfähigkeit des Paraffins wird durch die Beimengung von Graphit wettgemacht.

JP 57 087593 A beschreibt einen Speicherbehälter mit zwei übereinander angeordneten Wärmetauschern. In dem Behälter befindet sich ein Fluid und mit Latentspeichermaterialien gefüllte Mikrokapseln. Werden die Mikrokapseln vom unteren Wärmeaustauscher erwärmt, so ändern die Mikrokapseln ihre Dichte, werden leichter als das Fluid und steigen auf. Im oberen Wärmetauscher werden die Mikrokapseln abgekühlt, ändern dadurch wieder ihre Dichte, werden schwerer als das Fluid und sinken nach unten, wo sie wieder im unteren Wärmeaustauscher erwärmt werden.

Aufgabe der vorliegenden Erfindung ist es, bei einer Anlage zur Kraft-Wärme-Kopplung mit zumindest einer Brennstoffzelle die Wärmekapazität eines Heiz- oder Brauchwasserwärmespeichers zu erhöhen und dabei das notwendige Speichervolumen zu reduzieren sowie hierbei möglichst quasistationäre thermische Verhältnisse zu schaffen.

Erfindungsgemäß wird dies gemäß Anspruch 1 dadurch gelöst, dass die Anlage zur Kraft-Wärme-Kopplung mit zumindest einer Brennstoffzelle mit einem Latentwärmespeicher verbunden wird. Hierdurch ist es möglich, große Menge Wärme bei nahezu konstanter Temperatur zu speichern. Latentspeichermaterialien werden als Phase Change Materials (PCM) bezeichnet und basieren meist auf Paraffin. Bei dem Latentspeichermaterial handelt es sich um eine Emulsion (PCS) aus Wasser und mikroverkapseltem Paraffin.

Paraffin (CₙH₂ₙ₊₂) stellt eine Sammelbezeichnung für gesättigte Kohlenwasserstoffgemische dar, die hauptsächlich aus Erdöl gewonnen werden. Paraffine, die auch als Wachse bezeichnet werden, sind organische Stoffe, die nach der Raffination geruchlos, geschmacklos und ungiftig sind. Es wird zwischen Normalparaffine und Isoparaffine unterschieden. Normalparaffine sind einfache, lang gestreckte Ketten. Isoparaffine haben von einer langen Grundkette verzweigende Äste. Für wärmetechnische Anwendungen kommen überwiegend Normalparaffine zum Einsatz. Die Schmelztemperatur der Paraffine liegt zwischen 30 bis 90°C bei einer Zahl n zwischen 18 und 50. Mit steigender Molekülkettenlänge bzw. steigender Molmasse nimmt die Schmelztemperatur des Materials stetig zu. Paraffine sind gut für thermische Anwendungen geeignet. Der Vorteil der Paraffine liegt in der Nutzung der latenten Wärme während des Phasenwechsels. Ein geringerer Teil wird als sensible Wärme gespeichert. Die spez. Wärmekapazität von Wärmeparaffin liegt bei etwa 2,1 kJ/(kg·K), die Schmelzenthalpie bei 180 bis 230 kJ/kg. Hierdurch sind Paraffine bestens zur Wärmespeicherung geeignet. Paraffin speichert beim Phasenwechsel etwa soviel Wärme wie die gleiche Menge Wasser bei einer Temperaturdifferenz von 40 K. Demzufolge werden Paraffine vorzugsweise im Bereich ihrer Schmelztemperatur eingesetzt, da sie in diesem Bereich viel Wärme speichern können. Es ist jedoch darauf zu achten, dass beim Phasenübergang fest (Dichte 0,8 bis 0,9 kg/I) zu flüssig (Dichte 0,75 bis 0,85 kg/I) das Volumen um etwa 10 % zunimmt, so dass bei mit Paraffinen gefüllten Wärmespeichern eine Kompensationsvorrichtung vorgesehen sein sollte.

Eine Sonderform der PCM stellen PCS (Phase Change Slurries) dar. Hierbei wird Paraffin in kleinen Kügelchen (Durchmesser 1 bis 20 µm) von einer Hülle (Wandstärke deutlich kleiner 200 nm) umschlossen (Mikroverkapselung). Diese Kügelchen werden in Wasser gegeben, wodurch eine Emulsion aus Wasser und Kügelchen mit PCM-Eigenschaften, d.h. einer hohen Energieaufnahmemöglichkeit in einem kleinen Temperaturbereich, entsteht. Durch geeignete Wahl des PCM kann die Schmelztemperatur des PCS individuell in einem Bereich vorzugsweise zwischen 6 und 65°C eingestellt werden.

Ein besonderer Vorteil des PCS gegenüber PCM stellt die Tatsache dar, dass das Paraffin beim PCS durch die Kügelchen weiterhin mobil bleibt. Bei konventionellem Paraffin findet die Erstarrung zunächst an den Wärmeübertragerflächen des kühlenden Mediums statt. Das Paraffin lagert sich am Wärmeübertrager ab und bildet eine Dämmschicht, so dass die weitere Wärmeübertragung deutlich erschert wird. Die Wärmeleitfähigkeit von festem Paraffin liegt bei lediglich 0,18 W/(mK). Demgegenüber erstarrt bei PCS lediglich das Paraffin in den Kügelchen. Die Kügelchen können von der Wärmeübertragerfläche weg transportiert werden und somit die Wärmeübertragung auf das restliche PCS erleichtern.

Gemäß den Merkmalen des Anspruchs 2 weist der Wärmespeicher eine Vorrichtung zum Volumensausgleich auf, da mit dem Schmelz- beziehungsweise Kristallisationsprozess eine etwa 10 %-ige Volumenänderung verbunden ist. Sofern es sich beim dem Phasenwechselenergie speichernde Medium um PCS handelt, kann ein konventionelles Ausdehnungsgefäß mit einem von einer Membran abgetrennten Stickstoffpolster handeln.

Die Merkmale des kennzeichnenden Teils des abhängigen Anspruchs 3 sehen vor, dass die Anlage zur Kraft-Wärme-Kopplung zusätzlich ein Zusatzheizgerät aufweist, welches die Brauch- und Heizwasserbereitung unterstützt.

Bei einer Vorrichtung gemäß den Merkmalen des abhängigen Anspruchs 4 ergibt sich der Vorteil, dass der Latentwärmespeicher - im Gegensatz zu einem Warmwasserspeicher - mit einer Temperatur oberhalb 100°C betrieben werden kann. Dies ist vor allem dann erstrebenswert, wenn Hochtemperatur-PEM- oder SOFC-Brennstoffzellen zum Einsatz kommen.

Die Erfindung wird nun anhand der Zeichnungen detailliert erläutert.

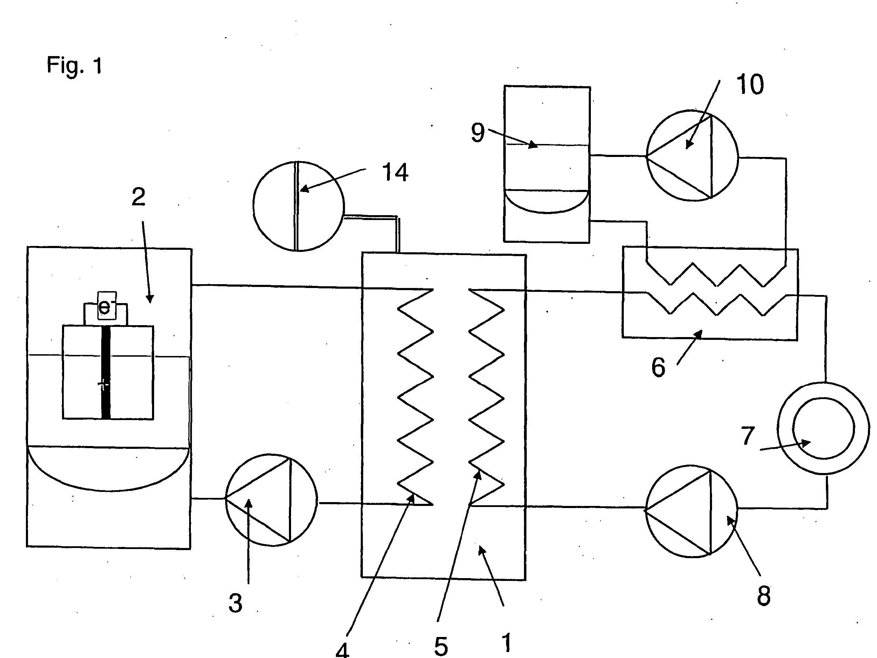

Figur 1 zeigt eine Anlage zur Kraft-Wärme-Kopplung mit einem Brennstoffzellenheizgerät 2, das einen Stapel Brennstoffzellen enthält, sowie einem Wärmespeicher 1, der mit PCS gefüllt ist und über ein Ausdehnungsgefäß 14 verfügt. Die Schmelztemperatur des PCS ist auf die Solltemperatur abgestimmt und kann nicht mehr verändert werden. Der Wärmespeicher 1 ist einerseits über einen Wärmeaustauscher 4 innerhalb des Wärmespeichers 1 über eine Pumpe 3 mit dem Brennstoffzellenheizgerät 2 verbunden. Andererseits befindet sich in dem Wärmespeicher 1 ein Wärmeaustauscher 5, der mit einem Plattenwärmeaustauscher 6, einem Heizkörper 7 sowie einer Pumpe 8 einen Kreislauf bildet. Der Plattenwärmeaustauscher 6 bildet mit einer Pumpe 10 sowie einem Zusatzheizgerät 9 einen weiteren Kreislauf.

Beim Betrieb erwärmt das Brennstoffzellenheizgerät 2 den Wärmespeicher 1 mit dem darin befindlichen PCS über den Wärmeaustauscher 4 auf eine Solltemperatur 1 bis 2 Kelvin oberhalb der Schmelztemperatur des PCS, so dass das PCS vollständig geschmolzen ist. Die Wärme kann dabei sowohl vom Vorlauf eines Brennstoffzellen-Kühlkreislaufes als auch aus den Abgasen der Brennstoffzellen stammen. Wird warmes Brauchwasser benötigt, so läuft die Pumpe 8 an und fördert Wasser in den Wärmeaustauscher 5. Dort wird Wärme aus dem PCS aufgenommen. Das Fluid im Kreislauf kann bei Bedarf im Plattenwärmeaustauscher 6 Wärme von dem Zusatzheizgerät 9 aufnehmen. Wird keine weitere Wärme benötigt, so verlässt das Fluid den Plattenwärmeaustauscher 6 unverändert, um Wärme an dem Heizkörper 7 abzugeben und abgekühlt über die Pumpe 8 dem Wärmeaustauscher 5 innerhalb des Wärmespeichers zugeführt zu werden. Wird die Schmelztemperatur im Wärmespeicher 1 unterschritten, so gibt das PCS Kristallisationswärme ab ohne dass die Temperatur im Wärmespeicher 1 fällt. Erst wenn das gesamte PCS kristallisiert ist, fällt die Temperatur im Wärmespeicher 1 weiter.

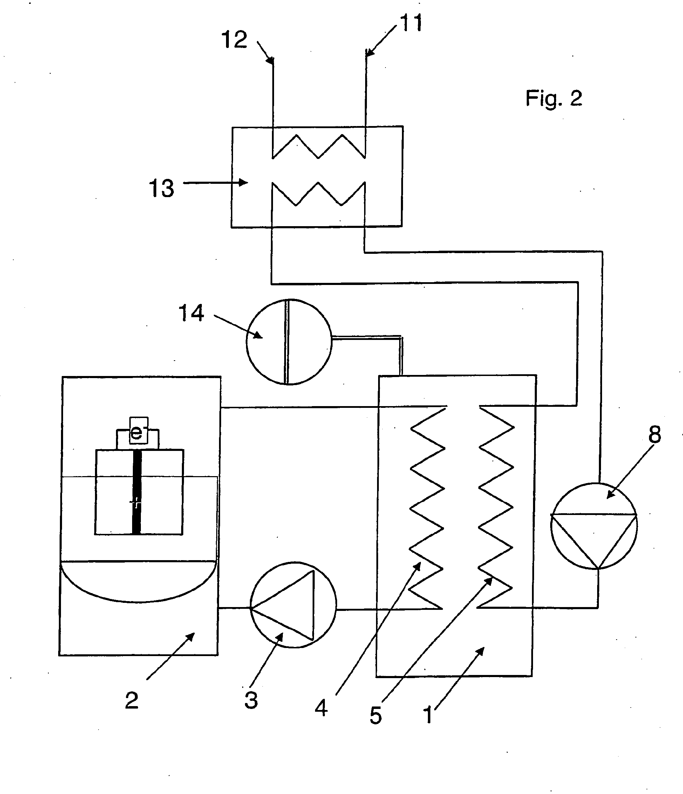

Figur 2 zeigt eine Variante, bei der zwischen dem Wärmespeicher 1 und der Heizungsseite, hier in Form der Heizungsrücklaufleitung 11 und der Heizungsvorlaufleitung 12 ein Wärmeaustauscher 13 zwischengeschaltet ist. Wird zwischen Wärmespeicher 1 und Wärmeaustauscher 13 ein hochtemperaturstabiler Wärmeträger, zum Beispiel ein Öl, eine ionische Flüssigkeit oder ein (Poly-)Glykol gefördert, so kann die Temperatur auf über 100°C erhöht werden, was eine erhöhte Wärmespeicherung ermöglichst.

Alternativ zur Kraft-Wärme-Kopplung mittels Brennstoffzelle kann als Kraft-Wärme-Kopplungs-Aggregat eine Verbrennungskraftmaschine zum Einsatz kommen.

## Patentansprüche

1. Anlage zur Kraft-Wärme-Kopplung mit zumindest einer Brennstoffzelle (2) oder einer Verbrennungskraftmaschine sowie einem Wärmespeicher (1) für Heiz- und / oder Brauchwasser, wobei der Wärmespeicher (1) teilweise oder vollständig mit Latentspeichermaterialien gefüllt ist, **dadurch gekennzeichnet, dass** das Latentspeichermaterial eine Emulsion (PCS, 2) aus Wasser und mikroverkapseltem Paraffin ist.

2. Anlage zur Kraft-Wärme-Kopplung nach Anspruch 1, **dadurch gekennzeichnet, dass** der Wärmespeicher (1) eine Vorrichtung zum Volumenausgleich, vorzugsweise ein Ausdehnungsgefäß (14), aufweist.

3. Anlage zur Kraft-Wärme-Kopplung nach Anspruch 1 oder 2, **dadurch gekennzeichnet, dass** die Anlage ein Zusatzheizgerät (9) zur Bereitstellung von Wärme, welches im Wärmespeicher (1) erhitztes Wasser direkt oder in einem nachgeschalteten Wärmeaustauscher (6) aufheizt, aufweist.

4. Anlage zur Kraft-Wärme-Kopplung nach einem der Ansprüche 1 bis 3, **dadurch gekennzeichnet, dass** der Wärmespeicher (1) über einen Zwischenkreis und einen Wärmeaustauscher (13) mit dem Heizungs- und / oder Brauchwasser (11, 12) verbunden ist.

## Claims

1. A cogeneration system comprising at least one fuel cell (2) or an internal combustion engine and a heat accumulator (1) for heating and/or sanitary water, with the heat accumulator (1) being partially or completely filled with heat-storing phase change materials, **characterised in that** the heat-storing phase change material is an emulsion (PCS, 2) of water and microencapsulated paraffin.

2. A cogeneration system as claimed in Claim 1, **characterised in that** the heat accumulator (1) contains a volume control device, preferably an expansion vessel (14).

3. A cogeneration system as claimed in Claim 1 or 2 **characterised in that** the system comprises a supplementary heater (9) for the provision of heat, such heater reheating either directly or in a downstream arranged heat exchanger (6) the water heated in the heat accumulator (1).

4. A cogeneration system as claimed in any of the Claims 1 to 3 **characterised in that** the heat accumulator (1) is connected via an intermediate circuit and a heat exchanger (13) with the heating and/or sanitary water (11, 12).

## Revendications

1. Système de cogénération comprenant au moins une pile à combustible (2) ou un moteur à combustion interne ainsi qu'un accumulateur de chaleur (1) pour eau de chauffage et/ou sanitaire, l'accumulateur de chaleur (1) étant partiellement ou entièrement rempli de matériaux accumulateurs latents, **caractérisé en ce que** le matériau accumulateur latent est une émulsion (PCS, 2) composée d'eau et de paraffine en microcapsules.

2. Système de cogénération selon la revendication 1, **caractérisé en ce que** l'accumulateur de chaleur (1) présente un dispositif pour l'équilibre des volumes, de préférence un bac d'expansion (14).

3. Système de cogénération selon la revendication 1 ou 2, **caractérisé en ce que** le système présente un appareil de chauffage supplémentaire (9) pour la mise à disposition de chaleur qui chauffe, directement ou dans un échangeur de chaleur (6) monté en aval, de l'eau chauffée dans l'accumulateur de chaleur (1).

4. Système de cogénération selon l'une quelconque des revendications 1 à 3, **caractérisé en ce que** l'accumulateur de chaleur (1) est relié par le biais d'un circuit intermédiaire et d'un échangeur de chaleur (13) à l'eau de chauffage et/ou sanitaire (11, 12).
